# EUROPEAN PATENT SPECIFICATION

(11) **EP 0 464 623 B1**
(45) Date of publication and mention of the grant of the patent: **17.01.1996**
(21) Application number: 91110537.7
(22) Date of filing: 26.06.1991
(51) Int. Cl.: G02F 1/1337

(54) **Ferroelectric liquid crystal display**
Ferroelektrische Flüssigkristall-Anzeigevorrichtung
Dispositif d'affichage à cristaux liquides ferro-électriques

(30) Priority: 27.06.1990 JP 168703/90
(43) Date of publication of application: 08.01.1992
(73) Proprietor: MATSUSHITA ELECTRIC INDUSTRIAL CO., LTD., Kadoma-shi, Osaka-fu, 571 (JP)
(72) Inventor: Yamamoto, Masao, Osaka-fu (JP); Mochizuki, Hideaki, Osaka-shi, Osaka-fu (JP); Satani, Hiroshi, Neyagawa-shi, Osaka-fu (JP); Joten, Kazuhiro, Hirakata-shi, osaka-fu (JP); Onishi, Hiroyuki, Ikeda-shi, Osaka-fu (JP); Uemura, Tsuyoshi, Kadoma-shi, Osaka-fu (JP)
(74) Representative: Eisenführ, Speiser & Partner

(56) References cited:
- EP-A- 0 347 178

## Description

### FIELD OF THE INVENTION

The present invention relates to a ferroelectric liquid crystal display having a new liquid crystal composition and liquid crystal alignment control film.

### BACKGROUND OF THE INVENTION

Recently liquid crystal display have been widely used not only in wrist watches, calculators and the like but also in image apparatuses. Liquid crystal color televisions have been also commercially available. At present the nematic liquid crystal is mainly used in color display liquid crystal panels. However various properties of the nematic liquid crystal are hardly ideal, but involve many problems. The ferroelectric liquid crystal can be applied to display apparatuses due to their various properties such as the quick response time, the memory property and so on, which can not be obtained by the nematic liquid crystal. Therefore researches in various fields have been carried out, yet still practical applications using ferroelectric liquid crystal has not been realized. One reason for this is because when using a conventional synthetic polymer such as polyimide and so on as an alignment control film for liquid crystal, the alignment of the ferroelectric liquid crystal becomes significantly irregular or the alignment of the twisted state is given, thus it is difficult to obtain the uniform alignment. It is considered that this is due to the difficulty in forming the film uniformly on a substrate when using the synthetic polymer.

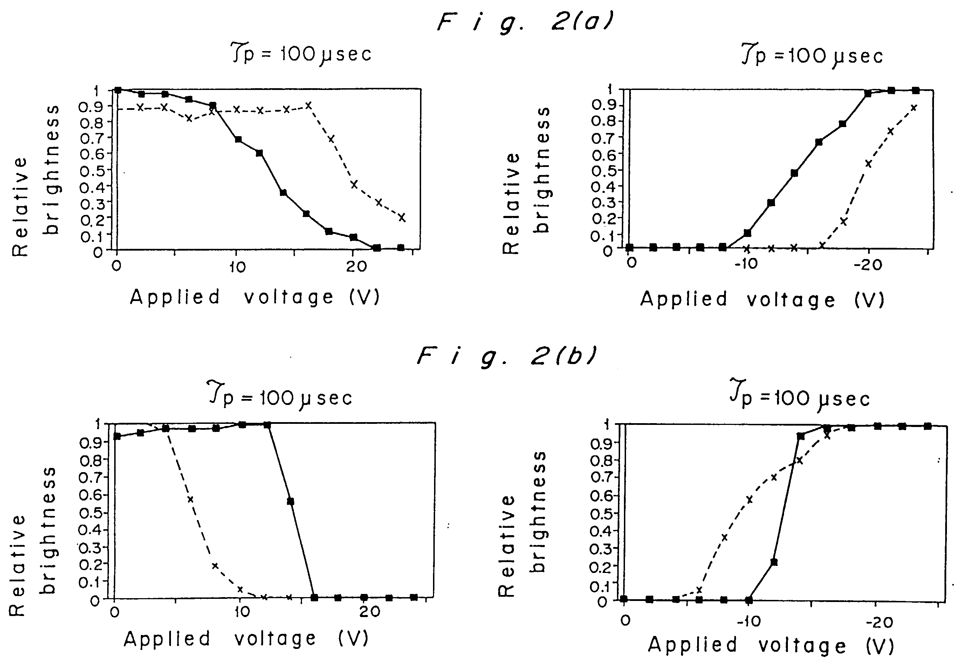

Figs. 2(a), (b) illustrate initial properties of the ferroelectric liquid crystal. Figs. 2(a) and 2(b) show threshold characteristics in the case of using polyimide (produced under the name JIA-1-3 by Nippon Gose Gomu, or SE 4110 or RN 715 by Nissan Kagaku Kabushiki Kaisha) and in the case of bovine serum albumin hemoglobin or polyalanine as an alignment control film of the ferroelectric liquid crystal cells. The cell gap is 2 µm. The mark ■ represents the maximum relative brightness upon applying voltage and indicates the response of the bulk. The mark x represents the relative brightness after scanning a series of the measured waveforms for 1000 lines and indicates the memory response. As can be seen from Figs. 2(a), (b), threshold characteristics cannot be obtained when using polyimide and to the contrary, rapid threshold characteristics and a fair memory property are obtained when using bovine serum albumin, hemoglobin or polyalanine.

The second reason why the ferroelectric liquid crystal has not been put into practice is due to the deterioration of the characteristics with time. Namely, the rapid threshold characteristics and the fair memory property deteriorate with time, by which the initial fair panel characteristics cannot be maintained and the quality of the display becomes inferior.

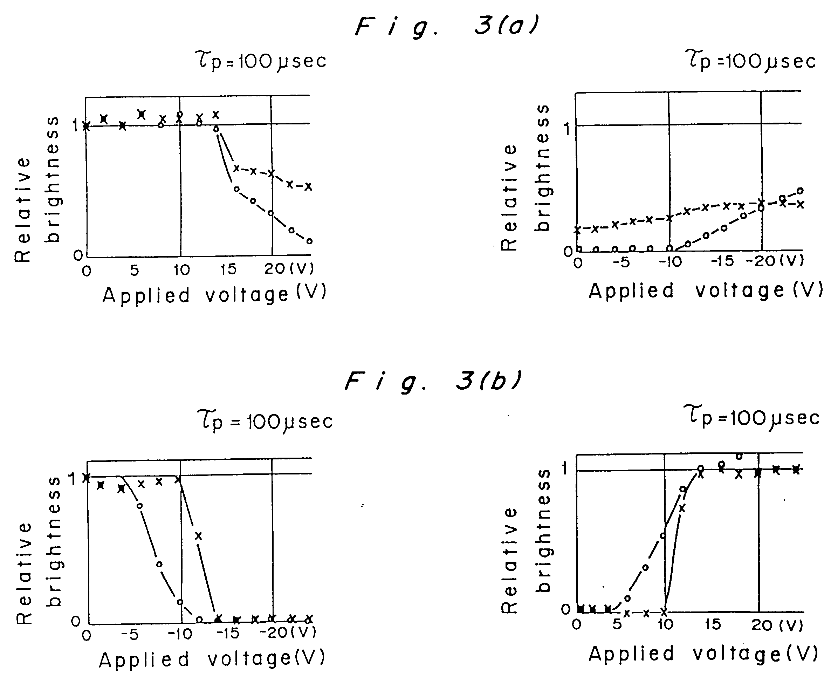

Figs. 3(a), (b) show deterioration of the characteristics of the ferroelectric liquid crystal with time. Fig. 3(a) shows the threshold characteristics of the ferroelectric liquid crystal after it is allowed to stand for 1000 hours, in which ZLI-3654 of a ferroelectric liquid crystal material is solely injected into the ferroelectric liquid crystal cells produced with use of bovine serum albumin, hemoglobin or polyalanine in their alignment control film. Fig. 3(b) shows the threshold characteristics of the ferroelectric liquid crystal after it is allowed to stand for 1000 hours, in which the ferroelectric liquid crystal composition, obtained by adding 0.3 weight % of poly-oxy-propylenediamine (molecular weight 230), as a compound having a basic substituent to ZLI-3654, is injected into the ferroelectric liquid crystal cells produced with use of bovine serum albumin, hemoglobin or polyalanine in their alignment control film. The cell gap is 2 µm. The mark o represents the maximum relative brightness upon applying the voltage and shows the response of the bulk. The mark x represents the relative brightness after scanning a series of the measured waveforms for 1000 lines. As can be seen from Figs. 3(a), (b), in the case of injecting the liquid crystals alone, the threshold characteristics after 1000 hours deteriorate and to the contrary, in the case of injecting the liquid crystals to which poly-oxy-propylenediamine has been added, the threshold characteristics after 1000 hours are still symmetrical and rapid. It is considered that this is caused by the change of the surface conditions between the liquid crystal and the alignment control film since as a result of the modification of the surface of the alignment control film by amine, the change of the polarity of the alignment control film takes place.

EP-A-0 347 178 discloses a ferroelectric liquid crystal display with alignment layers prepared with bovine serum albumine and hemoglobin.

### SUMMARY OF THE INVENTION

An object of the present invention is to realize uniform alignment of the liquid crystal molecules and to prevent the memory property (bistability), threshold characteristics and other characteristics of the ferroelectric liquid crystal displays from deteriorating with time.

For the purpose of achieving the above-mentioned object, the present invention is performed as specified in claim 1.

Owing to the above-mentioned combination, the uniform alignment of the liquid crystal molecules is realized and the deterioration of the characteristics with time is overcome, by which the lifetime of the panel characteristics can be significantly increased.

### BRIEF DESCRIPTION OF THE DRAWINGS

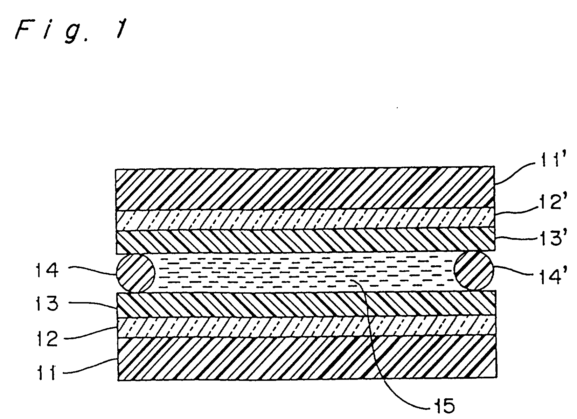

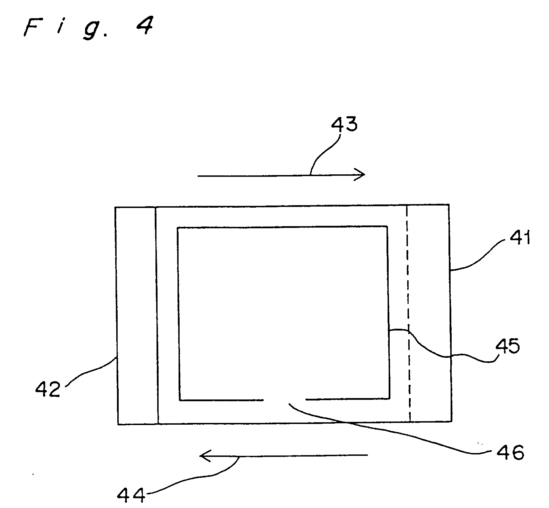

Fig. 1 is a sectional view schematically showing the structure of the ferroelectric liquid crystal displays according to the present invention. Figs. 2(a) and 3(a) are graphs showing the threshold characteristics of the comparative examples of the present invention. Figs. 2(b) and 3(b) are graphs showing the threshold characteristics of an embodiment of the present invention. Fig. 4 is a plan view showing the ferroelectric liquid crystal cells.

### DETAILED DESCRIPTION OF THE INVENTION

A preferred embodiment of the present invention, as recited in claims 1 to 8 will now be explained with reference to the drawings.

Fig. 1 is a sectional view schematically showing a liquid crystal display according to the present invention. A transparent electrode (ITO electrode) layer 12 comprising indium-tin oxide is formed on a glass or plastic substrate 11 and then a coating film for an alignment control film is formed thereon by using a solution mainly comprising a polymer having an asymmetric carbon, a polypeptide chain or a polar functional group on the main chain. As for a method of forming the coating film, a variety of coating methods, such as spin coating method, dip coating method, roll coating method, printing method, air knife coating method and so on, all employed industrially, can be applied. Alignment treatment by means of rubbing treatment is applied to said coating polymer film so as to form an alignment control film 13. A spacer also functioning as a sealing resin 14 in which glass or plastic cylindrical or spheral spacers are dispersed in resin, is printed by screen printing on the alignment control film of a substrate, leaving an opening for injecting liquid crystal imprinted. Two substrates are bonded together and after the spacer and the sealing resin 14 is cured, liquid crystal 15 is injected from the opening under a reduced pressure. Then the opening is sealed by a thermosetting or photo-curing resin so as to complete a ferroelectric liquid crystal cell. In the present embodiment, although the cells are filled with the liquid crystal material by means of so-called vacuum injection method, the present invention is not practically limited to the vacuum injection method, but a method utilizing the capillary phenomena may also be used or the liquid crystal may be dropped beforehand and two substrates are then bonded together.

The action of the above-mentioned embodiment will be explained.

First of all, various properties of the ferroelectric liquid crystal material employed in the present embodiment are shown as follows.

Liquid crystal material: ZLI-3654 (produced by MERCK)
Iso 86 Ch 76 SmA 62 SmC*
Tilt angle: 25° Ps: 29nC/cm

The phase transition temperature upon adding poly-oxy-propylenediamine (molecular weight 230) of a compound having a basic substituent by 0.3 weight % is shown as follows.
Iso 83 Ch 73 SmA 59 SmC*

Here Iso, Ch, SmA and SmC* mean isotropic phase, cholesteric phase, smectic A phase and chiral smectic C phase, respectively, of the ferroelectric liquid crystal. Ps means spontaneous polarization of the ferroelectric liquid crystal.

The phase transition temperature is measured by texture observation through a polarizing microscope and DSC (differential scanning calorimetry).

The structural formula of poly-oxy-propylenediamine (molecular weight 230) is as follows.

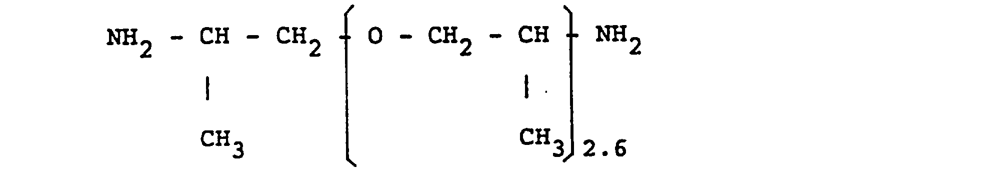

Figs. 2(a), (b) show the initial properties of the ferroelectric liquid crystal. Fig. 2(a) shows the threshold characteristics when polyimide varnish (produced by Nippon Gose Gomu under the name JIA-1-3) is used for the alignment control film of the ferroelectric liquid crystal cells. Fig. 2(b) shows the threshold characteristics when bovine serum albumin is used for the alignment control film of the ferroelectric liquid crystal cells. The cell gap is 2 µm.

The mark ■ represents the maximum relative brightness upon applying the voltage and shows the response of the bulk. The mark x represents the relative brightness after scanning a series of the measured waveforms for 1000 lines and shows the memory response. As can be seen from Figs. 2(a), (b), the threshold characteristics are not obtained with polyimide varnish and to the contrary, the rapid threshold characteristics and the fair memory property are obtained with bovine serum albumin.

Figs. 3(a), (b) show the deterioration of the threshold characteristics of the liquid crystal cells produced according to the process as mentioned before, in which bovine serum albumin (BSA) is used in the alignment control film. Fig. 3(a) shows the threshold characteristics when ZLI-3654 of the ferroelectric liquid crystal material is solely injected into the cells and allowed to stand for 1000 hours. Fig. 3(b) shows the threshold characteristics when the ferroelectric liquid crystal composition obtained by adding 0.3 weight % of poly-oxy-propylenediamine (molecular weight 230) of a compound having a basic substituent to ZLI-3654, is injected into the cells and allowed to stand for 1000 hours. The cell gap is 2 µm. The mark o represents the maximum brightness upon applying the voltage and shows the response of the bulk. The mark x represents the relative brightness after scanning a series of the measured waveforms for 1000 lines and shows the memory response. As can be seen from Figs. 3(a), (b), the threshold characteristics after 1000 hours in the case of injecting the liquid crystal alone deteriorate and to the contrary, in the case of the liquid crystal with addition of poly-oxy-propylenediamine is added, the symmetrical and rapid threshold characteristics after 1000 hours are maintained. It is considered that this is caused by the change of the surface conditions between the liquid crystal and the alignment control film since as a result of the modification of the surface of the alignment control film by amine, the change of the polarity of the alignment control film takes place. The quantity of an additive having a basic substituent is not particularly limited, but practically 0.01 - 5 weight % will be appropriate. No additive effect is shown with an additive of less than the above proper quantities and also the deterioration of the characteristics with time takes place.

The liquid crystal is not limited to ZLI-3654. The alignment control film 13 may be formed on an insulating layer provided on one side or both sides of the transparent electrode layer 12 so as to prevent the short circuit between the upper and lower substrates.

As for a polymer used as an alignment control film, a variety of protein including serum protein such as the aforementioned BAS, human serum albumin, rabbit serum albumin and so on, or albumin group such as egg albumin, or hemoglobin may be used.
Homopolymers or copolymers of amino acid such as asparagine, glutamine, histidine, leucine, methionine, phenylalanine, tryptophane, tyrosine, valine, alanine, cystine, or a mixture thereof may also be used. These polymers have an asymmetric carbon atom , a polypeptide chain or a polar functional group on the main chain.

Liquid crystal displays having a good initial alignment performance, switching performance and memory stability can be obtained by the combined use of the aforementioned alignment film of a polymer having an asymmetric carbon and the ferroelectric liquid crystal. The purpose of mixing a compound having a basic substituent in the liquid crystal is to maintain the superior initial characteristics thus obtained for a long period of time. At this time, the kind and the quantity of a compound having a basic substituent to be mixed in the liquid crystal are not particularly limited as long as the liquid crystal does not damage or lose the ferroelectricity, but the compound having a basic substituent may be an amine compound, which is preferable to be selected from the amine compound group consisting of the primary amine compound represented by general formula (1),

H₂N-R₁-NH₂ (1)

the primary compound represented by general formula (2),

H₂N-R₂ (2)

and the secondary amine compound represented by general formula (3),

R₃-HN-R₄ (3).

wherein R₁, R₂ and R₄ are hydrocarbon and one of CH₂ in the hydrocarbon may be substituted by at least one selected from the group consisting of -O-,-CO-,-OCO- and -COO- groups and R₃ is (CH₂)ₙOH (n is 1 or more). Especially, the compound having a basic substituent but lacking liquid crystallinity, such as benzylamine, phenylethylamine, 3-phenylpropylamine, n-benzylethanolamine, poly-oxy-propylenediamine and so on may be used solely or more than two kinds of these compounds may be combined.

When aromatic amine such as N,N'-diphenyl-p-phenylenediamine, triphenylamine, diphenylamine, n-methyldiphenylamine, aniline, N,N-dimethylaniline, p-aminophenol, p-nitroaniline, p- anisidine, n-phenyldiethanolamine, 1,1-(phenylimino)-di-2-propanol and so on is used as an additive, no additive effect is shown. When tertiary amine such as tribenzylamine, N,N-dimethylbenzylamine, N,N-diethylbenzylamine, 2,4,6-trisdimethylamino methylphenol (DMP-30) is used as an additive, no additive effect is shown, either.

### Example 1

Aqueous solution of bovine serum albumin of 1.0 weight % is prepared by dissolving bovine serum albumin of 5.0g in demineralized water of 495.0g. Then the aqueous solution is applied by the spin coating method on a glass substrate forming a pattern of the ITO electrode. The coated substrate is dried in an electric furnace at 110°C After drying, the rubbing treatment in a single direction is applied with rayon woven cloth so as to obtain an alignment control film. Thus two glass substrates having the alignment control film of bovine serum albumin are prepared. As illustrated in Fig. 4, on the surface of the alignment control film of one of the two substrates (for example, a lower liquid crystal supporting substrate 42), acid anhydride-curing epoxy resin functioning as a spacer and sealing resin 45, in which glass fiber having a diameter of 2.0 µm is dispersed, is printed by 0.2 mm in width at the circumference, leaving an opening 46 of 5 mm in width at a central portion of one side imprinted. On the other substrate (an upper liquid crystal supporting substrate 41), resin spheres having a diameter of 2.0 µm are spread. Two substrates are pressurized under such conditions that the rubbing directions 43, 44 of the alignment control films of the upper liquid crystal supporting substrate 41 and the lower liquid crystal supporting substrate 42, respectively, are parallel to each other and the sides forming the alignment control films are opposed to each other. Then the substrates are heated at 140°C for 5 hours and bonded together by curing. Next liquid crystal (produced by MERCK under the name of ZLI-3654) is injected from the opening 46 under a reduced pressure. Then the opening is sealed by commercially available acid anhydride-curing epoxy resin. Finally the substrates are heated up to approximately 85°C, at which the sealed liquid crystal shows isotropic phase, and then the temperature is gradually decreased. Thus so-called ferroelectric liquid crystal cell is completed. The ferroelectric liquid crystal cells thus obtained show a good alignment condition free of irregular alignment and upon applying the voltage, good electro-optical characteristics ensuring memory characteristics can be obtained.

### Example 2

Aqueous solution of bovine serum albumin of 1.0 weight % is prepared by dissolving bovine serum albumin of 5.0g in demineralized water of 495.0g. Then the aqueous solution is applied by the spin coating method on a glass substrate forming a pattern of the ITO electrode. The coated substrate is dried in an electric furnace at 110°C. After drying, the rubbing treatment in a single direction is applied with rayon woven cloth so as to obtain an alignment control film. Thus two glass substrates having the alignment control film of bovine serum albumin are prepared. As illustrated in Fig. 4, on the surface of the alignment control film of one of the two substrates (for example, a lower liquid crystal supporting substrate 42), acid anhydride-curing epoxy resin functioning as a spacer and sealing resin 45, in which glass fiber having a diameter of 2.0 µm is dispersed, is printed by 0.2 mm in width at the all circumference, leaving an opening 46 of 5 mm in width at a central portion of one side unprinted. On the other substrate (an upper liquid crystal supporting substrate 41), resin spheres having a diameter of 2.0 µm are spread. Two substrates are pressurized under such conditions that the rubbing directions 43, 44 of the alignment control films of the upper liquid crystal supporting substrate 41 and the lower liquid crystal supporting substrate 42, respectively, are parallel to each other and the sides forming the alignment control films are opposed to each other. Then the substrates are heated at 140°C for 5 hours and pasted together by curing. Next liquid crystal (produced by MERCK under the name of ZLI-3654), to which poly-oxy-propylenediamine (molecular weight 230) is added by 0.3 weight % as an additive having a basic substituent, is injected from the opening 46 under a reduced pressure. Then the opening is sealed by commercially available acid anhydride curing epoxy resin. Finally the substrates are heated up to approximately 85°C, at which the sealed liquid crystal shows isotropic phase, and then the temperature is gradually decreased. Thus so-called ferroelectric liquid crystal cell is completed. The ferroelectric liquid crystal cells thus obtained show a good alignment condition free of irregular alignment and upon applying the voltage, good electro-optical characteristics ensuring memory characteristics can be obtained. Further this good initial characteristics are maintained even after the ferroelectric liquid crystal cells are allowed to stand for 1000 hours.

### Example 3

Aqueous solution of bovine serum albumin of 1.0 weight % is prepared by deluting bovine serum albumin of 5.0g in demineralized water of 495.0g. An alignment control film of bovine serum albumin is formed with use of this solution in the way as described in Example 1. In the ferroelectric liquid crystal the same compound (ZLI-3654) is used, but benzylamine is mixed by 0.5 weight % as an additive. The ferroelectric liquid crystal cells thus produced show a good alignment condition free of irregular alignment and upon applying the voltage, good electro-optical characteristics ensuring memory characteristics can be obtained. These good initial characteristics are maintained even after the ferroelectric liquid crystal cells are allowed to stand for 1000 hours.

### Example 4

Aqueous solution of bovine serum albumin of 1.0 weight % is prepared by deluting bovine serum albumin of 5.0g in demineralized water of 495.0g. An alignment control film of bovine serum albumin is formed with use of this solution in the way as described in Example 1. In the ferroelectric liquid crystal the same compound (ZLI-3654) is used, but cyclohexylamine is mixed by 0.5 weight % as an additive. The ferroelectric liquid crystal cells thus produced show a good alignment condition free of irregular alignment and upon applying the voltage, good electro-optical characteristics ensuring memory characteristics can be obtained. These good initial characteristics are maintained even after the ferroelectric liquid crystal cells are allowed to stand for 1000 hours.

### Example 5

Aqueous solution of bovine serum albumin of 1.0 weight % is prepared by deluting bovine serum albumin of 5.0g in demineralized water of 495.0g. An alignment control film of bovine serum albumin is formed with use of this solution in the way as described in Example 1. In the ferroelectric liquid crystal the same compound (ZLI-3654) is used, but n-benzylethanolamine is mixed by 0.5 weight % as an additive. The ferroelectric liquid crystal cells thus produced show a good alignment condition free of irregular alignment and upon applying the voltage, good electro-optical characteristics ensuring memory characteristics can be obtained. These good initial characteristics are maintained even after the ferroelectric liquid crystal cells are allowed to stand for 1000 hours.

### Example 6

Aqueous solution of bovine serum albumin of 1.0 weight % is prepared by deluting bovine serum albumin of 5.0g in demineralized water of 495.0g. An alignment control film of bovine serum albumin is formed with use of this solution in the way as described in Example 1. In the ferroelectric liquid crystal the same compound (ZLI-3654) is used, but 3-phenylpropylamine is mixed by 0.5 weight % as an additive. The ferroelectric liquid crystal cells thus produced show a good alignment condition free of irregular alignment and upon applying the voltage, good electro-optical characteristics ensuring memory characteristics can be obtained. These good initial characteristics are maintained even after the ferroelectric liquid crystal cells are allowed to stand for 1000 hours.

### Comparative example 1

Commercially available polyimide varnish for liquid crystal alignment (produced by Nippon Gose Gome under the name of JIA-1-3) is applied by the spin coating method on a glass substrate forming a pattern of the ITO electrode. The coated substrate is heated in an electric furnace at 250°C for an hour. Rubbing treatment in a single direction is applied with rayon woven cloth so as to complete an alignment control film. Thus two glass substrates having the polyimide alignment control film are prepared. As illustrated in Fig. 4, on the surface of the alignment control film of one of the two substrates (for example, a lower liquid crystal supporting substrate 42), acid anhydride-curing epoxy resin functioning as a spacer and sealing resin 45, in which glass fiber having a diameter of 2.0 µm is dispersed, is printed by 0.2 mm in width at the all circumference, leaving an opening 46 of 5 mm in width at a central portion of one side unprinted. On the other substrate (an upper liquid crystal supporting substrate 41), resin spheres having a diameter of 2.0 µm are spread. Two substrates are pressurized under such conditions that the rubbing directions 43, 44 of the alignment control films of the upper liquid crystal supporting substrate 41 and the lower liquid crystal supporting substrate 42, respectively, are parallel to each other and the sides forming the alignment control films are opposed to each other. Then the substrates are heated at 140°C for 5 hours and bonded together by curing. Next liquid crystal (ZLI-3654) is injected from the opening 46 under the decreased pressure. Then the opening 46 is sealed by commercially available acid anhydride-curing epoxy resin. Finally the substrates are heated up to approximately 88°C, at which the sealed liquid crystal shows isotropic phase, and then the temperature is gradually decreased.
Thus so-called ferroelectric liquid crystal cell is completed. The ferroelectric liquid crystal cells thus obtained show irregular alignment and uniform display cannot be obtained.

### Comparative example 2

Commercially available polyimide varnish for liquid crystal alignment (produced by Nippon Gose Gome under the name of JIA-1-3) is coated by the spin coating method on a glass substrate forming a pattern of the ITO electrode. The coated substrate is heated in an electric furnace at 250°C for an hour. Rubbing treatment in a single direction is applied with rayon woven cloth so as to complete an alignment control film. Thus two glass substrates having the polyimide alignment control film are prepared. As illustrated in Fig. 4, on the surface of the alignment control film of one of the two substrates (for example, a lower liquid crystal supporting substrate 42), acid anhydride-curing epoxy resin functioning as a spacer and sealing resin 45, in which glass fiber having a diameter of 2.0 µm is dispersed, is printed by 0.2 mm in width at the all circumference, leaving an opening 46 of 5 mm in width at a central portion of one side unprinted.

On the other substrate (an upper liquid crystal supporting substrate 41), resin spheres having a diameter of 2.0 µm are spread. Two substrates are pressurized under such conditions that the rubbing directions 43, 44 of the alignment control films of the upper liquid crystal supporting substrate 41 and the lower liquid crystal supporting substrate 42, respectively, are parallel to each other and the sides forming the alignment control films are opposed to each other. Then the substrates are heated at 140°C for 5 hours and bonded together by curing. Next liquid crystal (ZLI-3654), to which poly-oxy-propylenediamine (molecular weight 230) is added by 0.3 weight % as an additive having a basic substituent, is injected from the opening 46 under a reduced pressure. Then the opening 46 is sealed by commercially available acid anhydride-curing epoxy resin. Finally the substrates are heated up to approximately 88°C, at which the sealed liquid crystal shows isotropic phase, and then the temperature is gradually decreased. Thus so-called ferroelectric liquid crystal cell is completed. The ferroelectric liquid crystal cells thus obtained show irregular alignment and uniform display cannot be obtained. Further from the initial stage, no clear threshold to the applied voltage can be obtained.

### Comparative example 3

Aqueous solution of bovine serum albumin of 1.0 weight % is prepared by deluting bovine serum albumin of 5.0g in demineralized water of 495.0g. An alignment control film of bovine serum albumin is formed with use of this solution in the way as described in Example 1. In the ferroelectric liquid crystal the same compound (ZLI-3654) is used, but triphenylamine is mixed by 0.5 weight % as an additive. The ferroelectric liquid crystal cells thus produced show a good alignment condition free of irregular alignment and upon applying the voltage, good electro-optical characteristics ensuring memory characteristics can be obtained. These good initial characteristics however deteriorate within 24 hours under the condition of permitting the ferroelectric liquid crystal cells to stand in a room.

### Comparative example 4

Aqueous solution of bovine serum albumin of 1.0 weight % is prepared by deluting bovine serum albumin of 5.0g in demineralized water of 495.0g. An alignment control film of bovine serum albumin is formed with use of this solution in the way as described in Example 1. In the ferroelectric liquid crystal the same compound (ZLI-3654) is used, but p-aminophenol is mixed by 0.5 weight % as an additive. The ferroelectric liquid crystal cells thus produced show a good alignment condition free of irregular alignment and upon applying the voltage, good electro-optical characteristics ensuring memory characteristics can be obtained. These good initial characteristics however deteriorate within 24 hours under the condition of permitting the ferroelectric liquid crystal cells to stand in a room.

### Comparative example 5

Aqueous solution of bovine serum albumin of 1.0 weight % is prepared by deluting bovine serum albumin of 5.0g in demineralized water of 495.0g. An alignment control film of bovine serum albumin is formed with use of this solution in the way as described in Example 1. In the ferroelectric liquid crystal the same compound (ZLI-3654) is used, but tribenzylamine is mixed by 0.5 weight % as an additive. The ferroelectric liquid crystal cells thus produced show a good alignment condition free of irregular alignment and upon applying the voltage, good electro-optical characteristics ensuring memory characteristics can be obtained. These good initial characteristics however deteriorate within 24 hours under the condition of permitting the ferroelectric liquid crystal cells to stand in a room.

### Comparative example 6

Aqueous solution of bovine serum albumin of 1.0 weight % is prepared by deluting bovine serum albumin of 5.0g in demineralized water of 495.0g. An alignment control film of bovine serum albumin is formed with use of this solution in the way as described in Example 1. In the ferroelectric liquid crystal the same compound (ZLI-3654) is used, but DMP-30 is mixed by 0.5 weight % as an additive. The ferroelectric liquid crystal cells thus produced show a good alignment condition free of irregular alignment and upon applying the voltage, good electro-optical characteristics ensuring memory characteristics can be obtained. These good initial characteristics however deteriorate within 24 hours under the condition of permitting the ferroelectric liquid crystal cells to stand in a room.

## Claims

1. A ferroelectric liquid crystal display comprising an alignment control film (13, 13') and a ferroelectric liquid crystal composition (15),
wherein the alignment control film (13, 13') contains a polymer, the polymer having an asymmetric carbon atom, a polypeptide chain or a polar functional group on the main chain,
**characterized** in that
for preventing deterioration of uniform alignment in said electric liquid crystal composition (15) with time, at least one compound having a basic substituent selected from primary or secondary amine compounds is added to said liquid crystal composition (15).

2. The ferroelectric liquid crystal display of claim 1, characterized in that the polymer having an asymmetric carbon atom exhibits optical activity.

3. The ferroelectric liquid crystal display of claim 1, characterized in that the polymer having a polypeptide chain is a protein or a polymer having a helix structure.

4. The ferroelectric liquid crystal display of anyone of the preceding claims characterized in that the compound having a basic substituent is a primary amine compound represented by the general formula (1) or (2),
H₂N-R₁-NH₂ (1)
H₂N-R₂ (2)
wherein R₁ and R₂ is a hydrocarbon respectively, one CH₂ group thereof being optionally substituted by at least one group selected from the group consisting of -O-,-CO-,-OCO- and -COO- groups.

5. The ferroelectric liquid crystal display of anyone of claims 1 to 3, characterized in that the compound having a basic substituent is a secondary amine compound represented by the general formula (3),
R₃-HN-R₄ (3)
wherein R₃ is (CH₂)ₙOH (n ≥ 1) and R₄ is a hydrocarbon, one CH₂ group of the hydrocarbon being optionally substituted by at least one group selected from -O-,-CO-,-OCO- and -COO- groups.

6. The ferroelectric liquid crystal display of claim 5, characterized in that the secondary amine compound is n-benzylethanolamine.

7. The ferroelectric liquid crystal display of anyone of the preceeding claims, characterized in that the content of the compound having a basic substituent is 0.01 to 5 weight %.

8. The ferroelectric liquid crystal display of anyone of the preceeding claims, characterized in that the liquid crystal alignment control film (13, 13') has been subjected to an alignment treatment by means of rubbing.

## Patentansprüche

1. Ferroelektrische Flüssigkristallanzeige, aufweisend eine Schicht zur Steuerung der Ausrichtung (13, 13') und eine ferroelektrische Flüssigkristallzusammensetzung (15),
wobei die Schicht zur Steuerung der Ausrichtung (13, 13') ein Polymer, welches ein asymmetrisches Kohlenstoffatom aufweist, eine Polypeptidkette oder eine polare funktionelle Gruppe auf der Hauptkette enthält,
**dadurch gekennzeichnet**, daß
der Flüssigkristallzusammensetzung (15) zur Vermeidung einer zeitlichen Verschlechterung der einheitlichen Ausrichtung in der Flüssigkristallzusammensetzung (15) mindestens eine Verbindung zugesetzt ist, die einen basischen Substituenten aufweist, der aus primären oder sekundären Aminoverbindungen ausgewählt ist.

2. Ferroelektrische Flüssigkristallanzeige nach Anspruch 1,
**dadurch gekennzeichnet**, daß
das Polymer, welches ein asymmetrisches Kohlenstoffatom aufweist, optische Aktivität zeigt.

3. Ferroelektrische Flüssigkristallanzeige nach Anspruch 1,
**dadurch gekennzeichnet**,daß
das Polymer, welches eine Polypeptidkette aufweist, ein Protein oder ein Polymer mit einer Helixstruktur ist.

4. Ferroelektrische Flüssigkristallanzeige nach einem der vorhergehenden Ansprüche,
**dadurch gekennzeichnet**, daß
die Verbindung, die einen basischen Substituenten aufweist, eine primäre Aminoverbindung ist, die durch die allgemeine Formel (1) oder (2)
H₂N-R₁-NH₂ (1)
H₂N-R₂ (2)
dargestellt wird, wobei R₁ bzw. R₂ Kohlenwasserstoff bedeutet, und wobei eine CH₂-Gruppe davon wahlweise mit mindestens einer Gruppe substituiert ist, die ausgewählt ist aus der Gruppe bestehend aus -O-,-CO-,-OCO- und -COO-Gruppen.

5. Ferroelektrische Flüssigkristallanzeige nach einem der Ansprüche 1 bis 3,
**dadurch gekennzeichnet**, daß
die Verbindung, die einen basischen Substituenten aufweist, eine sekundäre Aminoverbindung ist, die durch die allgemeine Formel (3)
R₃-HN-R₄ (3)
dargestellt wird, wobei R₃ die Bedeutung (CH₂)ₙOH (n≥1) hat und R₄ Kohlenwasserstoff bedeutet, und wobei eine CH₂-Gruppe des Kohlenwasserstoffs wahlweise mit mindestens einer Gruppe substituiert ist, die ausgewählt ist aus der Gruppe bestehend aus -O-,-CO-,-OCO- und -COO-Gruppen.

6. Ferroelektrische Flüssigkristallanzeige nach Anspruch 5,
**dadurch gekennzeichnet**, daß
die sekundäre Aminoverbindung n-Benzylethanolamin ist.

7. Ferroelektrische Flüssigkristallanzeige nach einem der vorhergehenden Ansprüche,
**dadurch gekennzeichnet**,daß
der Gehalt der Verbindung, die einen basischen Substituenten aufweist, 0,01 bis 5 Gew.-% beträgt.

8. Ferroelektrische Flüssigkristallanzeige nach einem der vorhergehenden Ansprüche,
**dadurch gekennzeichnet**, daß
die Schicht zur Steuerung der Ausrichtung (13, 13') einer Ausrichtbehandlung mit Hilfe von Reiben unterworfen wurde.

## Revendications

1. Dispositif d'affichage à cristaux liquides ferroélectriques comprenant un film de commande de l'alignement (13, 13') et une composition de cristaux liquides ferroélectriques (15), dans lequel ledit film de contrôle de l'alignement (13,13') contient un polymère, le polymère ayant un atome de carbone asymétrique, une chaîne de polypeptide ou un groupe fonctionnel polaire sur la chaîne principale, caractérisé en ce que, pour empêcher la détérioration dans le temps de l'alignement uniforme dans ladite composition de cristaux liquides ferroélectriques (15), on ajoute à ladite composition de cristaux liquides (15) au moins un composé basique ayant un substituant basique choisi parmi les composés amines primaires ou secondaires.

2. Dispositif d'affichage à cristaux liquides ferroélectriques selon la revendication 1, caractérisé en ce que le polymère ayant un atome de carbone asymétrique présente une activité optique.

3. Dispositif d'affichage à cristaux liquides ferroélectriques selon la revendication 1, caractérisé en ce que le polymère ayant une chaîne de polypeptide est une protéine ou un polymère ayant une structure en hélice.

4. Dispositif d'affichage à cristaux liquides ferroélectriques selon l'une quelconque des revendications précédentes, caractérisé en ce que le composé ayant un substituant basique est un composé amine primaire représenté par la formule générale (1) ou (2)
H₂N-R₁-NH₂ (1)
H₂N-R₂ (2)
où R₁ et R₂ sont chacun un hydrocarbure dont un groupe CH₂ a facultativement au moins un substituant choisi parmi -O- et les groupes -CO-, -OCO- et - COO-.

5. Dispositif d'affichage à cristaux liquides ferroélectriqucs selon l'une quelconque des revendications 1 à 3, caractérisé en ce que le composé ayant un substituant basique est un composé amine secondaire représenté par la formule générale (3)
R₃-HN-R₄ (3)
où R₃ est (CH₂)ₙOH (n ≥ 1) et R₄ est un hydrocarbure, un groupe CH₂ de l'hydrocarbure ayant facultativement au moins un substituant choisi parmi -O- et les groupes -CO-, -OCO- et -COO-.

6. Dispositif d'affichage à cristaux liquides ferroélectriques selon la revendication 5, caractérisé en ce que le composé amine secondaire est la N-benzyléthanolamine.

7. Dispositif d'affichage à cristaux liquides ferroélectriques selon l'une quelconque des revendications précédentes, caractérisé en ce que la teneur du composé ayant un substituant basique est de 0,01 à 5% en poids.

8. Dispositif d'affichage à cristaux liquides ferroélectriques selon l'une quelconque des revendications précédentes, caractérisé en ce que le film de commande de l'alignement des cristaux liquides (13,13') a été soumis à un traitement d'alignement par frottement.
